# EUROPEAN PATENT SPECIFICATION

(11) **EP 3 724 728 B1**
(45) Date of publication and mention of the grant of the patent: **28.10.2026**
(21) Application number: 18935251.1
(22) Date of filing: 29.09.2018
(51) Int. Cl.: G05B 19/418, G05B 19/042

(54) **INDUSTRIAL DEVICE MATCHING METHOD AND APPARATUS**
VERFAHREN UND VORRICHTUNG ZUM ABGLEICH EINER INDUSTRIELLEN VORRICHTUNG
PROCÉDÉ ET APPAREIL DE MISE EN CORRESPONDANCE DE DISPOSITIFS INDUSTRIELS

(43) Date of publication of application: 21.10.2020
(73) Proprietor: Siemens Aktiengesellschaft, 80333 München (DE)
(72) Inventor: WU, Chao Hua, Beijing 100020 (CN); LI, Cong Chao, Suzhou, Jiangsu 215200 (CN); SCHNEEGASS, Daniel, Beijing 100102 (CN); SHENG, Ruo Gu, Beijing 100102 (CN); TIAN, Peng Wei, Beijing 100102 (CN)
(74) Representative: Isarpatent
(86) International application number: PCT/CN2018/108869
(87) International publication number: WO 2020/062186

(56) References cited:
- EP-A1- 2 801 935
- EP-A1- 3 076 311
- WO-A1-2013/137884
- CN-A- 105 589 349
- CN-A- 107 330 212
- US-A1- 2017 351 226
- US-A1- 2018 139 104
- US-B2- 9 362 746

## Description

### BACKGROUND

### Technical Field

The present invention relates to the technical field of industry, and in particular relates to an industrial device matching method and apparatus.

### Related Art

EP 3 076 311 A1 relates to industrial automation systems, and more particularly, to a dynamic search engine capable of indexing and searching plant-wide industrial data across a range of different data source platforms and delivering search results using a layered map presentation.

US 2018/139104 A1 relates to network control systems, and in particular to discovery of topology of industrial control networks.

Nowadays, more and more industrial devices such as sensors and industrial controllers are used in factories. In the same factory, the information of these devices may be stored in different systems respectively, e.g., the information is stored in a distributed control system and an enterprise resource planning (ERP) system respectively. These systems are usually provided by different suppliers and used by different people. Therefore, information expression modes of the same industrial device in different systems are often different. For example, in a database of the distributed control system, an industrial device is usually named after a numeric string or a code string such as TB_1234A. In the ERP system, the name of an industrial device usually has semantics of a natural language such as Temperature_Sensor_A in_Compressor B.

In addition, the same type of industrial devices may be used in different factories, but different factories may adopt different distributed control systems. In the respective distributed control systems, information expression modes of these devices may also be different.

During industrial data analysis, it is usually necessary to acquire information of industrial devices from a plurality of industrial data sources such as information of industrial devices from a distributed control system and an ERP system in the same factory or information of industrial devices from distributed control systems of different factories. During comparison analysis, it is necessary to match industrial devices for different data sources, so as to determine a corresponding relationship between industrial devices in different data sources.

A current industrial device matching method is to install a radio frequency identification (RFID) tag on an industrial device. The method increases the device cost, and also needs to perform device installation and factory transformation with a great number of manpower and material resources.

Another method for determining industrial device matching is to manually annotate a corresponding relationship between industrial devices in different systems. This method needs to consume a great number of manpower resources, is low in efficiency, and is error-prone.

### SUMMARY

In view of this, the present invention provides an industrial device matching method and apparatus, used for simply acquiring a corresponding relationship between industrial devices in different industrial data sources to provide basis for industrial data analysis.

A first aspect provides an industrial device according to claim 1.

A corresponding relationship between industrial devices in different industrial data sources is determined by comparing a relationship topology between the industrial devices according to the similarity of relationships between the industrial devices in different industrial data sources. The method has the advantages of simplicity, result accuracy and the like.

When determining a relationship between various industrial devices in the industrial data source, at least one of the following relationships between various industrial devices in the industrial data source may be determined:
a Pearson's correlation coefficient according to the invention;
a frequency of co-occurrence in the industrial data source; and
a positional relationship in the industrial data source according to non-claimed embodiments.

Here, several criteria for measuring a relationship between industrial devices are provided.

Alternatively, after determining the first corresponding relationship, the method may further include the following steps: checking a local part in the first corresponding relationship; if a check result is wrong, for each of at least two industrial data sources, determining a second relationship between various industrial devices in the industrial data source, and determining a second relationship topology between the industrial devices in the industrial data source according to the determined second relationship between various industrial devices in the industrial data source; and comparing the second relationship topologies corresponding to the at least two industrial data sources, so as to determine a second corresponding relationship between industrial devices in industrial data sources, the second corresponding relationship enabling the second relationship topologies corresponding to the at least two industrial data sources to be similar, wherein the second relationship is different from the first relationship, and/or a comparison method adopted for comparing the second relationship topologies corresponding to the at least two industrial data sources is different from a comparison method adopted for comparing the first relationship topologies corresponding to the at least two industrial data sources.

Different relationship measurement criteria or different topology comparison methods are adopted to determine a corresponding relationship between industrial devices in industrial data sources, so as to achieve the purpose of checking a comparison result.

Alternatively, the at least two industrial data sources are data sources in different factories in which industrial devices have a similar layout, and the at least two industrial data sources involve part of or all industrial devices in the factories.

A second aspect provides an industrial device matching according to claim 3.

A corresponding relationship between industrial devices in different industrial data sources is determined by comparing a relationship topology between the industrial devices according to the similarity of relationships between the industrial devices in different industrial data sources. The method has the advantages of simplicity, result accuracy and the like.

The relationship determination module is specifically configured to determine at least one of the following relationships between various industrial devices in the industrial data source:
a Pearson's correlation coefficient according to the invention;
a frequency of co-occurrence in the industrial data source; and
a positional relationship in the industrial data source according to non-claimed embodiments.

Here, several criteria for measuring a relationship between industrial devices are provided.

Alternatively, the apparatus may further include a check module, configured to check a local part in the first corresponding relationship after the comparison module determines the first corresponding relationship. The relationship determination module is further configured to determine, for each of the at least two industrial data sources, a second relationship between various industrial devices in the industrial data source if a check result is wrong. The topology determination module is further configured to determine a second relationship topology between the industrial devices in the industrial data source according to the second relationship, determined by the relationship determination module, between various industrial devices in the industrial data source. The comparison module is further configured to compare the second relationship topologies corresponding to the at least two industrial data sources, so as to determine a second corresponding relationship between industrial devices in industrial data sources, the second corresponding relationship enabling the second relationship topologies corresponding to the at least two industrial data sources to be similar, wherein the second relationship is different from the first relationship, and/or, a comparison method adopted for comparing, by the comparison module, the second relationship topologies corresponding to the at least two industrial data sources is different from a comparison method adopted for comparing the first relationship topologies corresponding to the at least two industrial data sources.

Different relationship measurement criteria or different topology comparison methods are adopted to determine a corresponding relationship between industrial devices in industrial data sources, so as to achieve the purpose of checking a comparison result.

Alternatively, the at least two industrial data sources are data sources in different factories in which industrial devices have a similar layout, and the at least two industrial data sources involve part of or all industrial devices in the factories.

A third aspect provides an industrial device matching apparatus. The apparatus may include: at least one memory, configured to store a computer-readable code; and at least one processor, configured to call the computer-readable code to execute the method provided in the first aspect or any possible implementation manner of the first aspect.

A fourth aspect provides a computer-readable medium. The computer-readable medium has a computer-readable instruction stored thereon. When the computer-readable instruction is executed by a processor, the processor is enabled to execute the method provided in the first aspect or any possible implementation manner of the first aspect.

A fifth aspect provides a computer program, including a computer-readable instruction. When the computer-readable instruction is executed by a processor, the processor is enabled to execute the method provided in the first aspect or any possible implementation manner of the first aspect.

A sixth aspect provides a computer program product. The computer program product is stored on a computer-readable medium tangibly and includes a computer-readable instruction. When the computer-readable instruction is executed by a processor, the processor is enabled to execute the method provided in the first aspect or any possible implementation manner of the first aspect.

### BRIEF DESCRIPTION OF THE DRAWINGS

FIG. 1 is a flowchart of an industrial device matching method provided in an embodiment of the present invention.
FIG. 2 is a schematic diagram of accurately matching industrial devices between two industrial data sources in an embodiment of the present invention.
FIG. 3 is a schematic diagram of approximately matching industrial devices between two industrial data sources in an embodiment of the present invention.
FIG. 4 is a schematic diagram of matching industrial devices between industrial data sources of different systems in the same factory in an embodiment of the present invention.
FIG. 5 is a schematic diagram of matching industrial devices between industrial data sources in different factories in an embodiment of the present invention.
FIG. 6 is a structural schematic diagram of an industrial device matching apparatus provided in an embodiment of the present invention.
FIG. 7 is another structural schematic diagram of an industrial device matching apparatus provided in an embodiment of the present invention.

### Drawing reference sign list:

S101: Collect data of different industrial data sources
S102: Determine a relationship between various industrial devices in each industrial data source
S103: Determine a relationship topology between the industrial devices in each industrial data source according to the relationship determined in S102
S104: Compare relationship topologies corresponding to at least two industrial data sources, so as to determine a corresponding relationship between industrial devices in industrial data sources
S105: Check the corresponding relationship
S106: Determine a final corresponding relationship

| | | |
|---|---|---|
| 11: First industrial data source | 12: Second industrial data source | 21: Relationship topology of first industrial data source |
| 22: Relationship topology of second industrial data source | 30: Final corresponding relationship | |
| 601: Data collection module | 602: Relationship determination module | 603: Topology determination module |
| 604: Comparison module | 605: Check module | 606: Memory |
| 607: Processor | | |

### DETAILED DESCRIPTION

As previously mentioned, when industrial data from different industrial data sources is analyzed, it is necessary to acquire a corresponding relationship between industrial devices in different industrial data sources. In the embodiment of the present invention, a large number of experiments and researches prove that even if information expression modes of industrial devices for different industrial data sources are different, relationships between the industrial devices are similar. Therefore, in the embodiment of the present invention, a relationship between industrial devices for each industrial data source is determined, so as to obtain a relationship topology between the industrial devices corresponding to the industrial data source; and by comparing relationship topologies between different industrial data sources, an optimal corresponding relationship between industrial devices between industrial data sources is found, so that the relationship topologies corresponding to different industrial data sources are closest. A corresponding relationship between industrial devices in different industrial data sources is determined by comparing a relationship topology between the industrial devices according to the similarity of relationships between the industrial devices in different industrial data sources. The method has the advantages of simplicity, result accuracy and the like.

The method and the device provided in the embodiment of the present invention will be described in detail below with reference to the drawings.

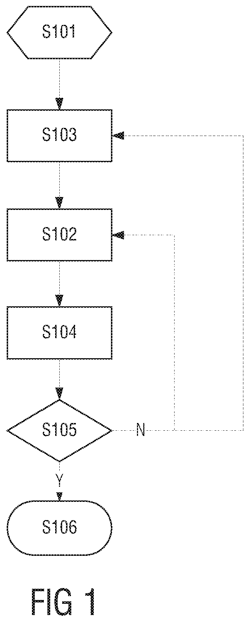

As shown in FIG. 1, an industrial device matching method provided in the embodiment of the present invention may include the following steps:
S101: Collect data of different industrial data sources.

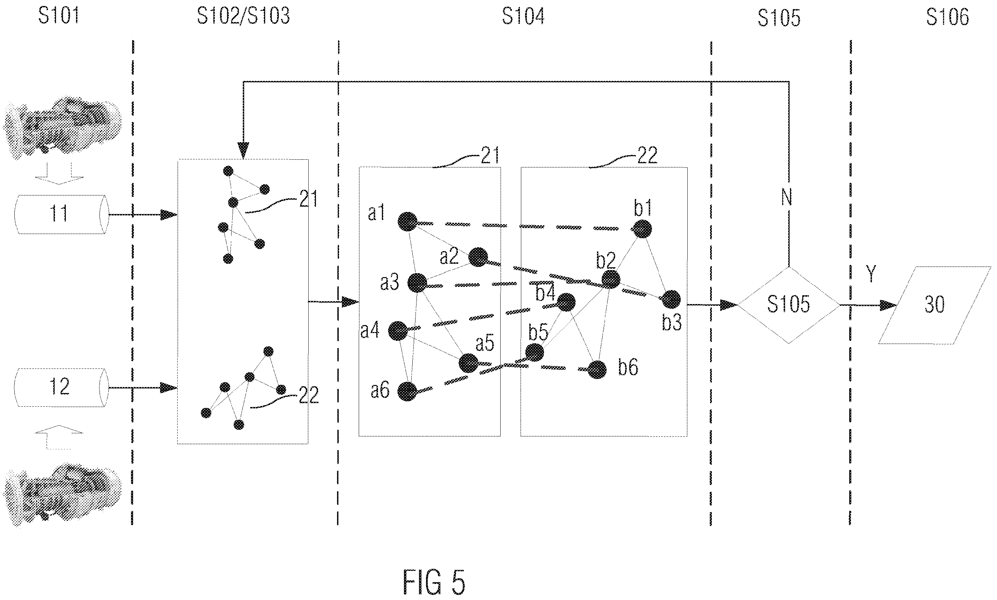

For example, information of industrial devices in distributed control control systems in different factories may be regarded as different industrial data sources (an industrial data source 11 and an industrial data source 12 as shown in FIG. 5).

Collected data may be sensor data, maintenance records, blueprint and the like. These data may be associated with one industrial device, or may be associated with multiple devices with the same type.

The at least two industrial data sources are data sources in different factories in which industrial devices have a similar layout, and the industrial data sources may involve part of or all industrial devices in the factories.

S102: Determine a relationship between various industrial devices in each industrial data source.

A large number of experiments and researches prove that even if information expression modes of industrial devices for different industrial data sources are different, relationships between the industrial devices are similar. For example, data collected by two sensors for measuring the vibration of the same device is usually similar (the data may be stored in a database of a distributed control system), and the two sensors frequently occur in maintenance records at the same time (these maintenance records may exist in an ERP system, in other implementation manners, the maintenance records may also exist in other systems, e.g., in an electronic document, and in some other implementation manners, the maintenance records may also be recorded manually by a maintainer and then sorted into electronic data). The names of the two sensors in the distributed control system and the ERP system may be different, but relationships between the two sensors in the two systems are the same.

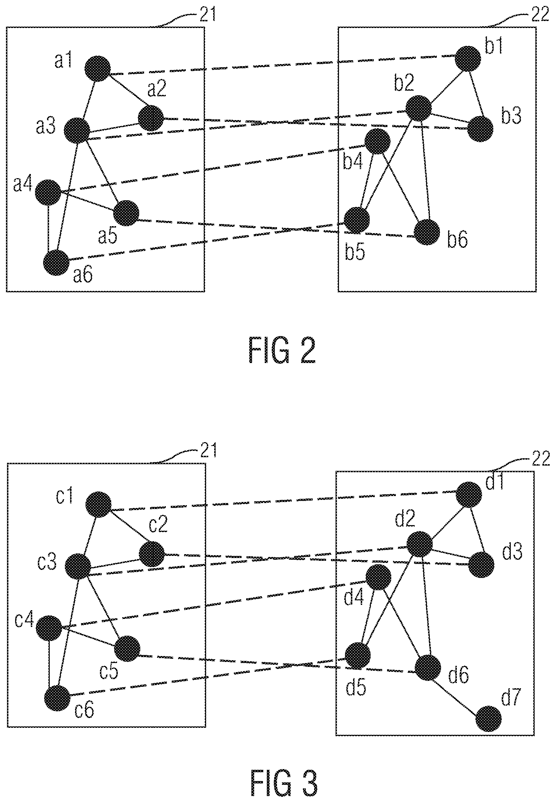

FIG. 2 and FIG. 3 illustrate a relationship between industrial devices in a factory with a graph. The industrial devices are vertexes of the graph, and a connection line between the vertexes illustrates the relationship between the industrial devices. Alternatively, as the relationship between two industrial devices is closer, a connection line between vertexes corresponding to the two industrial devices is shorter. The first relationship between industrial devices is represented by a Pearson's correlation coefficient. Alternatively, a further relationship between the industrial devices may be represented by a frequency of co-occurrence of industrial devices in an industrial data source, and a positional relationship between various industrial devices in an industrial data source such as blueprint.

For example, a compressor in a factory is controlled by a plurality of programmable logic controllers (PLCs), wherein these PLCs are PLC a, PLC b and PLC c, respectively. The Pearson's correlation coefficient is taken as an example. In S102, the Pearson's correlation coefficient between PLC a and PLC b may be 0.8, the Pearson's correlation coefficient between PLC b and PLC c may be 0.6, and the Pearson's correlation coefficient between PLC c and PLC a may be 0.4.

Here, for example, there are 100 industrial devices in a factory. "A relationship between various industrial devices in an industrial data source" described above may be any one of the following situations. But, it is merely demonstrative here, instead of being limitative.
1. A relationship between every two industrial devices among these 100 industrial devices.
2. A relationship between every two industrial devices among a part of these 100 industrial devices such as 50 industrial devices.
3. A relationship between every two industrial devices in each of a plurality of groups, such as 5 groups, of these 100 industrial devices and a relationship between every two groups among the 5 groups.

The Pearson's correlation coefficient represents a relationship between two industrial devices or two groups. A particular case of a relationship between devices or components is that the Pearson's correlation coefficient is 0.

S103: Determine a relationship topology between the industrial devices in each industrial data source according to the relationship determined in S102. Relationship topologies 21 and 22 may be as shown in FIG. 2 and FIG. 3.

By still taking the foregoing PLC a, b and c as an example, a relationship topology among three PLCs for controlling the compressor may be represented by using the following matrix: $\left[\begin{matrix}1 & 0.8 & 0.4 \\ 0.8 & 1 & 0.6 \\ 0.4 & 0.6 & 1\end{matrix}\right]$

S104: Compare relationship topologies corresponding to at least two industrial data sources, so as to determine a corresponding relationship between industrial devices in industrial data sources. The determined corresponding relationship should enable the relationship topologies corresponding to the at least two industrial data sources to be similar.

For example, as shown in FIG. 2, a corresponding relationship between vertexes of a graph in two relationship topologies 21 and 22 in FIG. 2 is searched, so that the relationship topologies corresponding to the two industrial data sources is similar as much as possible. The corresponding relationship between industrial devices may be searched in multiple manners.

For example, adjacent matrices of two relationship topologies are represented by A and B respectively, and an optimal corresponding relationship between industrial devices may be obtained by solving min∥PAP^{T}-B∥, where Matrix P is a permutation matrix.

FIG. 2 illustrates a situation of accurately matching industrial devices between two industrial data sources, and FIG. 3 illustrates a situation of approximately matching industrial devices between two industrial data sources. From the foregoing description, it can be seen that in the embodiment of the present invention, it is unnecessary to know information such as a naming rule of an industrial device in advance for matching industrial devices, and it is only necessary to collect data including information of a relationship between the industrial devices.

S105: Check the corresponding relationship.

Alternatively, it may also be checked whether the corresponding relationship, obtained in S104, between industrial devices is correct by performing S105. If so, it is determined that the corresponding relationship obtained in S104 is a final corresponding relationship 30. If not, S102 may be returned to re-determine a relationship between industrial devices in each industrial data source, S103 is performed to re-determine a relationship topology between industrial devices in each industrial data source, and S104 is performed to re-compare the relationship topology between industrial devices in various industrial data sources, so as to re-determine a corresponding relationship between industrial devices in various industrial data sources. When S102 is re-performed, the adopted relationship measurement method may be different from the previous method; and moreover, when relationship topologies corresponding to different industrial data sources are compared, the adopted comparison method may also be different from the previous comparison method.

When the corresponding relationship is checked, part of industrial devices may be randomly selected, and a manual manner is adopted to check whether the corresponding relationship between these industrial devices is correct.

S106: Determine a final corresponding relationship 30.

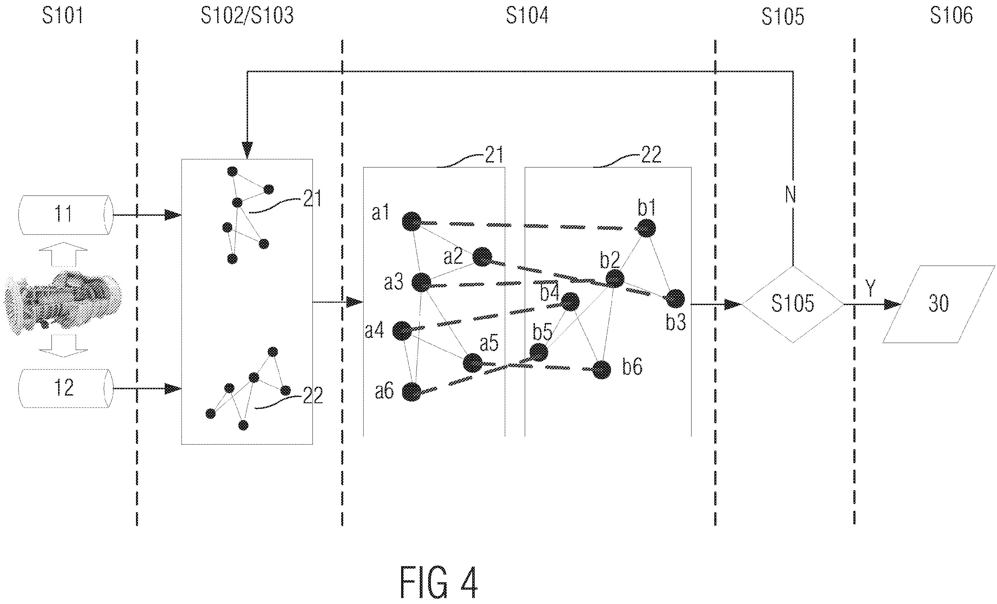

An application scene 1 of the embodiment of the present invention is introduced below in conjunction with FIG. 4.

Thousands of sensors may be deployed in a modern factory and configured to monitor a device operating situation or a production process. Sensor data is stored in a certain database. In addition, events associated with these sensors are also recorded in documents. These documents are edited by using a natural language, and therefore the names of the sensors in these documents are different from the names of sensors in the database. If a user wants to jointly analyze information from the database and these documents, it is necessary to identify a corresponding relationship between sensors of the two different industrial data sources. For example, when a sensor data mode corresponding to a certain fault mode needs to be found, it is necessary to jointly analyze sensor data and maintenance records.

The relationship between the sensors may be determined according to the sensor data. For example, the relationship between the sensors is described by using a Pearson's correlation coefficient. By taking the Pearson's correlation coefficient as an input of adjacent matrices, the relationship topology between the sensors may be determined. Similarly, the relationship between the sensors may be determined according to the foregoing documents. For example, a frequency of co-occurrence of several sensors in a document may be used for describing the relationship between these sensors to further determine the relationship topology between the sensors. In the sensor data and the document, the sensors may have different names, but the relationship between these sensors is similar. The optimal corresponding relationship between the sensors enables two relationship topologies to be most similar.

An application scene 2 of the embodiment of the present invention is introduced below in conjunction with FIG. 5.

Two factories may use similar devices, and sensors for monitoring these devices are also deployed similarly. In the two factories, since database providers are different, the names of the sensors may be different. In order to apply the knowledge of a factory to another factory (for example, the predictive maintenance knowledge of a factory is applied to another factory), it is necessary to determine a corresponding relationship between sensors in the two factories. According to sensor data of a factory, a relationship between various sensors in the factory is determined, and a Pearson's correlation coefficient is taken as an input of adjacent matrices, so that a relationship topology between various sensors in the factory is established. The optimal corresponding relationship between the sensors enables relationship topologies corresponding to the two factories to be most similar.

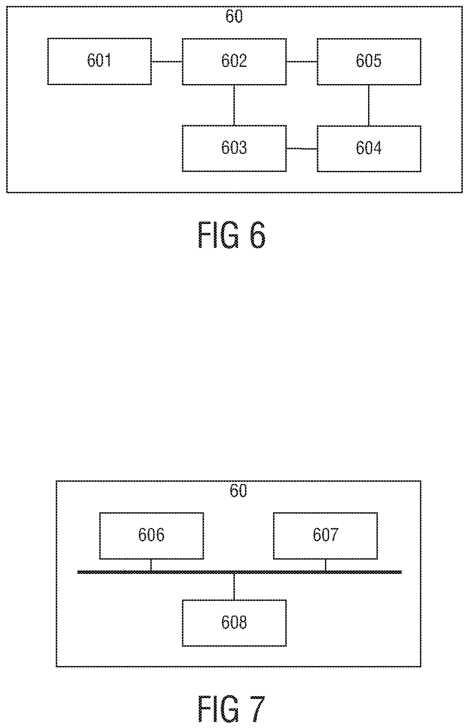

Based on the same inventive concept, the embodiment of the present invention also provides an industrial device matching apparatus 60. The apparatus may be used for the foregoing matching method. As shown in FIG. 6, the industrial device matching apparatus 60 may include:
a data collection module 601, configured to collect data of at least two industrial data sources;
a relationship determination module 602, configured to determine, for each of the at least two industrial data sources, a first relationship between various industrial devices in the industrial data source;
a topology determination module 603, configured to determine, for each of the at least two industrial data sources, a first relationship topology between the industrial devices in the industrial data source according to the determined first relationship between various industrial devices in the industrial data source; and
a comparison module 604, configured to compare the first relationship topologies corresponding to the at least two industrial data sources, so as to determine a first corresponding relationship between industrial devices in industrial data sources, the first corresponding relationship enabling the first relationship topologies corresponding to the at least two industrial data sources to be similar.

The relationship determination module 602 is configured to determine as the first relationships between various industrial devices in the industrial data source:
a Pearson's correlation coefficient.

Alternatively, the relationship determination module 602 is further configured to determine, as a further relationship between various industrial devices in the industrial data source, at least one of:
a frequency of co-occurrence in the industrial data source; and
a positional relationship in the industrial data source.

Alternatively, the apparatus may further include a check module 605, configured to check a local part in the first corresponding relationship after the comparison module 604 determines the first corresponding relationship.

The relationship determination module 602 is further configured to determine, for each of the at least two industrial data sources, a second relationship between various industrial devices in the industrial data source if a check result of the check module 605 is wrong.

The topology determination module 603 is further configured to determine a second relationship topology between the industrial devices in the industrial data source according to the second relationship, determined by the relationship determination module 602, between various industrial devices in the industrial data source.

The comparison module 604 is further configured to compare the second relationship topologies corresponding to the at least two industrial data sources, so as to determine a second corresponding relationship between industrial devices in industrial data sources, the second corresponding relationship enabling the second relationship topologies corresponding to the at least two industrial data sources to be similar.

The second relationship is different from the first relationship, and/or, a comparison method adopted for comparing, by the comparison module 604, the second relationship topologies corresponding to the at least two industrial data sources is different from a comparison method adopted for comparing the first relationship topologies corresponding to the at least two industrial data sources.

Alternatively, the at least two industrial data sources are data sources in different factories in which industrial devices have the similar layout, and the at least two industrial data sources involve part of or all industrial devices in the factories.

Other alternative implementation manners of the matching apparatus 60 may be referred to the foregoing matching method. Descriptions are omitted herein.

As shown in FIG. 7, in hardware implementation, the matching apparatus 60 may include:
at least one memory 606, configured to store a computer-readable code; and
at least one processor 607, configured to call the computer-readable code to execute the matching method as shown in FIG. 1.

The at least one memory 606 and the at least one processor 607 may be connected through a bus. In addition, the matching apparatus 60 further includes a display 608. The display 608 may provide a graphical user interface (GUI). A user may select, through the GUI, an algorithm parameter such as a parameter for describing a relationship between various industrial devices in an industrial data source, and an algorithm adopted for comparing relationship topologies of different industrial data sources.

Various modules included in the matching apparatus 60 as shown in FIG. 6, namely the data collection module 601, the relationship determination module 602, the topology determination module 603, the comparison module 604 and the check module 605, may be regarded as program modules in a computer-readable code stored in the at least one memory 606 as shown in FIG. 7. The at least one processor 607 is configured to call the program modules to execute the matching method provided in the embodiment of the present invention.

In addition, each of the foregoing modules may also be regarded as each functional module implemented by combining hardware and software, to achieve various functions involved when the matching apparatus 60 executes the matching method. Each of the foregoing modules may also be regarded as each functional module implemented by hardware, which is used for achieving various functions involved when the matching apparatus 60 executes an access control method. For example, control logics of each flow involved in the matching method are fired into, for example, field-programmable gate arrays (FPGAs) chip or complex programmable logic devices (CPLDs) in advance. The function of each module is executed by these chips or devices. A specific implementation manner may be determined according to engineering practices.

In addition, the embodiment of the present invention also provides a computer-readable medium. The computer-readable medium has a computer-readable instruction stored thereon. When the computer-readable instruction is executed by a processor, the processor is enabled to execute the matching method as shown in FIG. 1. The embodiment of the computer-readable medium includes a floppy disk, a hard disk, a magnetic optical disc, an optical disc (such as CD-ROM, CD-R, CD-RW, DVD-ROM, DVD-RAM, DVD-RW, and DVD+RW), a magnetic tape, a nonvolatile memory card, and a ROM. Alternatively, the computer-readable instruction may be downloaded from a server computer or a cloud via a communication network.

In addition, the embodiment of the present invention also provides a computer program. The computer program may include a computer-readable instruction. When the computer-readable instruction is executed by a processor, the processor is enabled to execute the matching method as shown in FIG. 1.

In addition, the embodiment of the present invention also provides a computer program product. The computer program product is stored on a computer-readable medium tangibly and includes a computer-readable instruction. When the computer-readable instruction is executed by a processor, the processor is enabled to execute the method as shown in FIG. 1.

It should be noted that not all steps and modules in each flow and each system structure diagram are necessary, and some steps or modules may be omitted according to actual requirements. The performing sequence of various steps is not fixed, and may be adjusted as required. A system structure described in each of the foregoing embodiments may be a physical structure, or may be a logical structure. That is, some modules may be implemented by the same physical entity, or, some modules may be implemented by a plurality of physical entities or may be jointly implemented by certain components in a plurality of independent devices.

## Claims

1. An industrial device matching method, comprising:
collecting (S101) data from at least two industrial data sources,
wherein the collected data is sensor data and is associated with one industrial device or with multiple devices with the same type;
wherein the at least two industrial data sources are data sources in different factories, and the at least two industrial data sources involve part of or all industrial devices in their respective factories, or
wherein the at least two industrial data sources are data sources in different factories in which industrial devices have a similar layout, and the at least two industrial data sources involve part of or all industrial devices in the factories;
for each of the at least two industrial data sources,
determining (S102) a first relationship between various industrial devices in each of the industrial data sources based on the collected data, comprising determining a Pearson's correlation coefficient representing the first relationship between the various industrial devices, and
determining (S103) a first relationship matrix between the industrial devices in each of the industrial data sources according to the determined first relationship between various industrial devices in each of the industrial data sources; and
comparing (S104) the first relationship matrices corresponding to the at least two industrial data sources, so as to determine a first corresponding relationship between the industrial devices in the industrial data sources, wherein the first corresponding relationship is an optimal corresponding relationship between industrial devices between two of the factories so that the relationship matrices corresponding to the different data sources are the closest, wherein the determined first corresponding relationship is used for applying knowledge obtained from one of the two factories to the other one of the two factories.

2. The method of claim 1, after determining the first corresponding relationship, further comprising:
checking manually a part in the first corresponding relationship corresponding to a part of the industrial devices randomly selected;
if a check result is that the corresponding relationship between the selected industrial devices is not correct,
for each of the at least two industrial data sources,
determining a second relationship in the industrial data source between the industrial devices, and
determining a second relationship matrix in the industrial data source between the industrial devices according to the determined second relationship between the industrial devices in the industrial data source; and
comparing the second relationship matrices corresponding to the at least two industrial data sources, so as to determine a second corresponding relationship in industrial data sources between the industrial devices, wherein the second corresponding relationship is an optimal second corresponding relationship between industrial devices between industrial sources so that the second relationship matrices corresponding to the different data sources are the closest,
wherein the second relationship is different from the first relationship, and/or
a comparison method adopted for comparing the second relationship matrices corresponding to the at least two industrial data sources is different from a comparison method adopted for comparing the first relationship matrices corresponding to the at least two industrial data sources.

3. An industrial device matching apparatus (60), comprising:
a data collection module (601), configured to collect data from at least two industrial data sources,
wherein the collected data is sensor data and is associated with one industrial device or with multiple devices with the same type;
wherein the at least two industrial data sources are data sources in different factories in which industrial devices have a similar layout, and the at least two industrial data sources involve part of or all industrial devices in the factories;
a relationship determination module (602), configured to determine, for each of the at least two industrial data sources, a first relationship between various industrial devices in each of the industrial data sources, comprising determining a Pearson's correlation coefficient representing the first relationship between the various industrial devices;
a matrix determination module (603), configured to determine, for each of the at least two industrial data sources, a first relationship matrix between the industrial devices in each of the industrial data sources according to the determined first relationship between various industrial devices in each of the industrial data sources; and
a comparison module (604), configured to compare the first relationship matrices corresponding to the at least two industrial data sources, so as to determine a first corresponding relationship between the industrial devices in the industrial data sources, wherein the first corresponding relationship is an optimal corresponding relationship between industrial devices between two of the factories so that the relationship matrices corresponding to the different data sources are the closest, wherein the determined first corresponding relationship is used for applying knowledge obtained from one of the two factories to the other one of the two factories.

4. The apparatus (60) of claim 3,
further comprising a check module (605), configured to check manually a part in the first corresponding relationship corresponding to a part of the industrial devices randomly selected, after the comparison module (604) determines the first corresponding relationship, wherein
the relationship determination module (602) is further configured to determine, for each of the at least two industrial data sources, a second relationship in the industrial data source between the industrial devices if a check result of the check module (605) is that the corresponding relationship between the selected industrial devices is not correct;
the matrix determination module (603) is further configured to determine a second relationship matrix in the industrial data source between the industrial devices according to the second relationship in the industrial data source, determined by the relationship determination module (602), between various industrial devices;
the comparison module (604) is further configured to compare the second relationship matrices corresponding to the at least two industrial data sources, so as to determine a second corresponding relationship in industrial data sources between the industrial devices, wherein the second corresponding relationship is an optimal second corresponding relationship between industrial devices between industrial sources so that the second relationship matrices corresponding to the different data sources are the closest, wherein the determined first corresponding relationship is used for applying knowledge obtained from one of the at least two industrial data sources to another one of the at least two industrial data sources; and
the second relationship is different from the first relationship, and/or, a comparison method adopted for comparing, by the comparison module (604), the second relationship matrices corresponding to the at least two industrial data sources is different from a comparison method adopted for comparing the first relationship matrices corresponding to the at least two industrial data sources.

5. An industrial device matching apparatus (60), comprising:
at least one memory (606), configured to store a computer-readable code; and
at least one processor (607), configured to call the computer-readable code to execute the method of claim 1 or 2.

6. A computer-readable medium, having a computer-readable instruction stored thereon, wherein when the computer-readable instruction is executed by a processor, the processor is enabled to execute the method of claim 1 or 2.

7. A computer program, comprising a computer-readable instruction, wherein when the computer-readable instruction is executed by a processor, the processor is enabled to execute the method of claim 1 or 2.

8. A computer program product, being stored on a computer-readable medium tangibly and comprising a computer-readable instruction, wherein when the computer-readable instruction is executed by a processor, the processor is enabled to execute the method of claim 1 or 2.

## Patentansprüche

1. Verfahren zum Abgleichen industrieller Vorrichtungen, das Folgendes umfasst:
Sammeln (S101) von Daten aus mindestens zwei industriellen Datenquellen,
wobei die gesammelten Daten Sensordaten sind und mit einer industriellen Vorrichtung oder mit mehreren Vorrichtungen mit dem gleichen Typ assoziiert sind;
wobei die mindestens zwei industriellen Datenquellen Datenquellen in unterschiedlichen Fabriken sind und die mindestens zwei industriellen Datenquellen einen Teil oder alle industriellen Vorrichtungen in ihren jeweiligen Fabriken einschließen, oder
wobei die mindestens zwei industriellen Datenquellen Datenquellen in unterschiedlichen Fabriken sind, in denen industrielle Vorrichtungen ein ähnliches Layout aufweisen, und die mindestens zwei industriellen Datenquellen einen Teil oder alle industriellen Vorrichtungen in den Fabriken einschließen;
für jede der mindestens zwei industriellen Datenquellen,
Bestimmen (S102) einer ersten Beziehung zwischen verschiedenen industriellen Vorrichtungen in jeder der industriellen Datenquellen basierend auf den gesammelten Daten, umfassend Bestimmen eines Pearson-Korrelationskoeffizienten, der die erste Beziehung zwischen den verschiedenen industriellen Vorrichtungen darstellt, und
Bestimmen (S103) einer ersten Beziehungsmatrix zwischen den industriellen Vorrichtungen in jeder der industriellen Datenquellen gemäß der bestimmten ersten Beziehung zwischen verschiedenen industriellen Vorrichtungen in jeder der industriellen Datenquellen; und
Vergleichen (S104) der ersten Beziehungsmatrizen, die den mindestens zwei industriellen Datenquellen entsprechen, um eine erste Entsprechungsbeziehung zwischen den industriellen Vorrichtungen in den industriellen Datenquellen zu bestimmen, wobei die erste Entsprechungsbeziehung eine optimale Entsprechungsbeziehung zwischen industriellen Vorrichtungen zwischen zwei der Fabriken ist, so dass die Beziehungsmatrizen, die den unterschiedlichen Datenquellen entsprechen, einander am nächsten liegen, wobei die bestimmte erste Entsprechungsbeziehung zum Anwenden von Wissen, das von einer der zwei Fabriken erhalten wurde, auf die andere der zwei Fabriken verwendet wird.

2. Verfahren nach Anspruch 1, das nach dem Bestimmen der ersten Entsprechungsbeziehung ferner Folgendes umfasst:
manuelles Prüfen eines Teils in der ersten Entsprechungsbeziehung, der einem Teil der industriellen Vorrichtungen entspricht, der zufällig ausgewählt wurde;
wenn ein Prüfergebnis ist, dass die Entsprechungsbeziehung zwischen den ausgewählten industriellen Vorrichtungen nicht korrekt ist,
für jede der mindestens zwei industriellen Datenquellen,
Bestimmen einer zweiten Beziehung in der industriellen Datenquelle zwischen den industriellen Vorrichtungen, und
Bestimmen einer zweiten Beziehungsmatrix in der industriellen Datenquelle zwischen den industriellen Vorrichtungen gemäß der bestimmten zweiten Beziehung zwischen den industriellen Vorrichtungen in der industriellen Datenquelle; und
Vergleichen der zweiten Beziehungsmatrizen, die den mindestens zwei industriellen Datenquellen entsprechen, um eine zweite Entsprechungsbeziehung in industriellen Datenquellen zwischen den industriellen Vorrichtungen zu bestimmen, wobei die zweite Entsprechungsbeziehung eine optimale zweite Entsprechungsbeziehung zwischen industriellen Vorrichtungen zwischen industriellen Quellen ist, so dass die zweiten Beziehungsmatrizen, die den unterschiedlichen Datenquellen entsprechen, einander am nächsten liegen,
wobei sich die zweite Beziehung von der ersten Beziehung unterscheidet, und/oder
wobei sich ein Vergleichsverfahren, das zum Vergleichen der zweiten Beziehungsmatrizen, die den mindestens zwei industriellen Datenquellen entsprechen, eingesetzt wird, sich von einem Vergleichsverfahren unterscheidet, das zum Vergleichen der ersten Beziehungsmatrizen, die den mindestens zwei industriellen Datenquellen entsprechen, eingesetzt wird.

3. Einrichtung (60) zum Abgleichen industrieller Vorrichtungen, die Folgendes umfasst:
ein Datenerfassungsmodul (601), das dazu ausgelegt ist, Daten von mindestens zwei industriellen Datenquellen zu sammeln,
wobei die gesammelten Daten Sensordaten sind und mit einer industriellen Vorrichtung oder mit mehreren Vorrichtungen mit dem gleichen Typ assoziiert sind;
wobei die mindestens zwei industriellen Datenquellen Datenquellen in unterschiedlichen Fabriken sind, in denen industrielle Vorrichtungen ein ähnliches Layout aufweisen, und die mindestens zwei industriellen Datenquellen einen Teil oder alle industriellen Vorrichtungen in den Fabriken einschließen;
ein Beziehungsbestimmungsmodul (602), das dazu ausgelegt ist, für jede der mindestens zwei industriellen Datenquellen eine erste Beziehung zwischen verschiedenen industriellen Vorrichtungen in jeder der industriellen Datenquellen zu bestimmen, umfassend Bestimmen eines Pearson-Korrelationskoeffizienten, der die erste Beziehung zwischen den verschiedenen industriellen Vorrichtungen darstellt;
ein Matrixbestimmungsmodul (603), das dazu ausgelegt ist, für jede der mindestens zwei industriellen Datenquellen eine erste Beziehungsmatrix zwischen den industriellen Vorrichtungen in jeder der industriellen Datenquellen gemäß der bestimmten ersten Beziehung zwischen verschiedenen industriellen Vorrichtungen in jeder der industriellen Datenquellen zu bestimmen; und
ein Vergleichsmodul (604), das dazu ausgelegt ist, die ersten Beziehungsmatrizen, die den mindestens zwei industriellen Datenquellen entsprechen, zu vergleichen, um eine erste Entsprechungsbeziehung zwischen den industriellen Vorrichtungen in den industriellen Datenquellen zu bestimmen, wobei die erste Entsprechungsbeziehung eine optimale Entsprechungsbeziehung zwischen industriellen Vorrichtungen zwischen zwei der Fabriken ist, so dass die Beziehungsmatrizen, die den unterschiedlichen Datenquellen entsprechen, einander am nächsten liegen, wobei die bestimmte erste Entsprechungsbeziehung zum Anwenden von Wissen, das von einer der zwei Fabriken erhalten wurde, auf die andere der zwei Fabriken verwendet wird.

4. Einrichtung (60) nach Anspruch 3,
ferner umfassend ein Prüfmodul (605), das dazu ausgelegt ist, einen Teil in der ersten Entsprechungsbeziehung, der einem Teil der industriellen Vorrichtungen entspricht, der zufällig ausgewählt wurde, manuell zu prüfen, nachdem das Vergleichsmodul (604) die erste Entsprechungsbeziehung bestimmt, wobei
das Beziehungsbestimmungsmodul (602) ferner dazu ausgelegt ist, für jede der mindestens zwei industriellen Datenquellen eine zweite Beziehung in der industriellen Datenquelle zwischen den industriellen Vorrichtungen zu bestimmen, falls ein Prüfergebnis des Prüfmoduls (605) ist, dass die Entsprechungsbeziehung zwischen den ausgewählten industriellen Vorrichtungen nicht korrekt ist;
das Matrixbestimmungsmodul (603) ferner dazu ausgelegt ist, eine zweite Beziehungsmatrix in der industriellen Datenquelle zwischen den industriellen Vorrichtungen gemäß der zweiten Beziehung in der industriellen Datenquelle, die durch das Beziehungsbestimmungsmodul (602) bestimmt wird, zwischen verschiedenen industriellen Vorrichtungen zu bestimmen;
das Vergleichsmodul (604) ferner dazu ausgelegt ist, die zweiten Beziehungsmatrizen, die den mindestens zwei industriellen Datenquellen entsprechen, zu vergleichen, um eine zweite Entsprechungsbeziehung in industriellen Datenquellen zwischen den industriellen Vorrichtungen zu bestimmen, wobei die zweite Entsprechungsbeziehung eine optimale zweite Entsprechungsbeziehung zwischen industriellen Vorrichtungen zwischen industriellen Quellen ist, so dass die zweiten Beziehungsmatrizen, die den unterschiedlichen Datenquellen entsprechen, einander am nächsten liegen, wobei die bestimmte erste Entsprechungsbeziehung zum Anwenden von Wissen, das von einer der mindestens zwei industriellen Datenquellen erhalten wird, auf eine andere der mindestens zwei industriellen Datenquellen verwendet wird; und
sich die zweite Beziehung von der ersten Beziehung unterscheidet und/oder ein Vergleichsverfahren, das zum Vergleichen, durch das Vergleichsmodul (604), der zweiten Beziehungsmatrizen, die den mindestens zwei industriellen Datenquellen entsprechen, eingesetzt wird, sich von einem Vergleichsverfahren unterscheidet, das zum Vergleichen der ersten Beziehungsmatrizen, die den mindestens zwei industriellen Datenquellen entsprechen, eingesetzt wird.

5. Einrichtung (60) zum Abgleichen industrieller Vorrichtungen, die Folgendes umfasst:
mindestens einen Speicher (606), der dazu ausgelegt ist, einen computerlesbaren Code zu speichern; und
mindestens einen Prozessor (607), der dazu ausgelegt ist, den computerlesbaren Code aufzurufen, um das Verfahren nach einem der Ansprüche 1 oder 2 auszuführen.

6. Computerlesbares Medium, auf dem eine computerlesbare Anweisung gespeichert ist, wobei, wenn die computerlesbare Anweisung durch einen Prozessor ausgeführt wird, dem Prozessor ermöglicht wird, das Verfahren nach Anspruch 1 oder 2 auszuführen.

7. Computerprogramm, das eine computerlesbare Anweisung umfasst, wobei, wenn die computerlesbare Anweisung durch einen Prozessor ausgeführt wird, dem Prozessor ermöglicht wird, das Verfahren nach Anspruch 1 oder 2 auszuführen.

8. Computerprogrammprodukt, das materiell auf einem computerlesbaren Medium gespeichert ist und eine computerlesbare Anweisung umfasst, wobei, wenn die computerlesbare Anweisung durch einen Prozessor ausgeführt wird, dem Prozessor ermöglicht wird, das Verfahren nach Anspruch 1 oder 2 auszuführen.

## Revendications

1. Procédé de mise en correspondance d'un dispositif industriel, le procédé comprenant les étapes suivantes :
collecter (S101) des données provenant d'au moins deux sources de données industrielles,
les données collectées étant des données de capteur et étant associées à un dispositif industriel ou à plusieurs dispositifs du même type ;
où les au moins deux sources de données industrielles sont des sources de données dans différentes usines, et les au moins deux sources de données industrielles impliquent une partie ou tous les dispositifs industriels dans leurs usines respectives, ou où les au moins deux sources de données industrielles sont des sources de données dans différentes usines dans lesquelles les dispositifs industriels présentent un agencement similaire, et les au moins deux sources de données industrielles impliquent une partie ou tous les dispositifs industriels des usines ;
pour chacune des au moins deux sources de données industrielles, déterminer (S102) une première relation entre divers dispositifs industriels dans chacune des sources de données industrielles sur la base des données collectées, ce qui comprend de déterminer un coefficient de corrélation de Pearson représentant la première relation entre les divers dispositifs industriels, et
déterminer (S103) une première matrice de relations entre les dispositifs industriels dans chacune des sources de données industrielles en fonction de la première relation déterminée entre divers dispositifs industriels dans chacune des sources de données industrielles ; et
comparer (S104) les premières matrices de relations correspondant aux au moins deux sources de données industrielles, de façon à déterminer une première relation correspondante entre les dispositifs industriels dans les sources de données industrielles, la première relation correspondante étant une relation correspondante optimale entre des dispositifs industriels entre deux des usines de façon à ce que les matrices de relations correspondant aux différentes sources de données soient les plus proches, où la première relation correspondante déterminée est utilisée pour appliquer des connaissances issues d'une des deux usines à l'autre des deux usines.

2. Procédé selon la revendication 1 comprenant en outre, après la détermination de la première relation correspondante, les étapes suivantes :
vérifier manuellement une pièce dans la première relation correspondante correspondant à une partie des dispositifs industriels sélectionnés aléatoirement ;
si le résultat de la vérification est que la relation correspondante entre les dispositifs industriels sélectionnés n'est pas correct,
pour chacune des au moins deux sources de données industrielles, déterminer une deuxième relation dans la source de données industrielles entre les dispositifs industriels, et
déterminer une deuxième matrice de relations dans la source de données industrielles entre les dispositifs industriels en fonction de la deuxième relation déterminée entre les dispositifs industriels dans la source de données industrielles ; et
comparer les deuxièmes matrices de relations correspondant aux au moins deux sources de données industrielles, de manière à déterminer une deuxième relation correspondante dans des sources de données industrielles entre les dispositifs industriels, la deuxième relation correspondante étant une deuxième relation correspondante optimale entre des dispositifs industriels entre des sources industrielles de manière à ce que les deuxièmes matrices de relations correspondant aux différentes sources de données soient les plus proches,
où la deuxième relation est différente de la première relation, et/ou
un procédé de comparaison adopté pour comparer les deuxièmes matrices de relations correspondant aux au moins deux sources de données industrielles est différent d'un procédé de comparaison adopté pour comparer les premières matrices de relations correspondant aux au moins deux sources de données industrielles.

3. Appareil de mise en correspondance d'un dispositif industriel (60), comprenant :
un module de collecte de données (601), configuré pour collecter des données d'au moins deux sources de données industrielles,
les données collectées étant des données de capteur et étant associées à un dispositif industriel ou à plusieurs dispositifs du même type ;
où les au moins deux sources de données industrielles sont des sources de données dans différentes usines dans lesquelles les dispositifs industriels présentent un agencement similaire, et les au moins deux sources de données industrielles impliquent une partie ou tous les dispositifs industriels des usines ;
un module de détermination de relations (602), configuré pour déterminer, pour chacune des au moins deux sources de données industrielles, une première relation entre différents dispositifs industriels dans chacune des sources de données industrielles, ce qui comprend de déterminer un coefficient de corrélation de Pearson représentant la première relation entre les différents dispositifs industriels ;
un module de détermination de matrices (603), configuré pour déterminer, pour chacune des au moins deux sources de données industrielles, une première matrice de relations entre les dispositifs industriels dans chacune des sources de données industrielles en fonction de la première relation déterminée entre divers dispositifs industriels dans chacune des sources de données industrielles ; et
un module de comparaison (604), configuré pour comparer les premières matrices de relations correspondant aux au moins deux sources de données industrielles, de façon à déterminer une première relation correspondante entre les équipements industriels dans les sources de données industrielles, la première relation correspondante étant une relation correspondante optimale entre des équipements industriels entre deux des usines de façon à ce que les matrices de relations correspondant aux différentes sources de données soient les plus proches, où la première relation correspondante déterminée est utilisée pour appliquer des connaissances issues d'une des deux usines à l'autre des deux usines.

4. Appareil (60) selon la revendication 3,
comprenant en outre un module de vérification (605), configuré pour vérifier manuellement une pièce dans la première relation correspondante correspondant à une pièce des dispositifs industriels sélectionnés aléatoirement, après que le module de comparaison (604) a déterminé la première relation correspondante, où
le module de détermination de relations (602) est en outre configuré pour déterminer, pour chacune des au moins deux sources de données industrielles, une deuxième relation dans la source de données industrielles entre les dispositifs industriels si un résultat de contrôle du module de vérification (605) est que la relation correspondante entre les dispositifs industriels sélectionnés n'est pas correcte ;
le module de détermination de matrices (603) est en outre configuré pour déterminer une deuxième matrice de relations dans la source de données industrielles entre les dispositifs industriels en fonction de la deuxième relation dans la source de données industrielles, déterminée par le module de détermination de relations (602), entre divers dispositifs industriels ;
le module de comparaison (604) est en outre configuré pour comparer les deuxièmes matrices de relations correspondant aux au moins deux sources de données industrielles, de manière à déterminer une deuxième relation correspondante dans des sources de données industrielles entre les dispositifs industriels, où la deuxième relation correspondante est une deuxième relation correspondante optimale entre des dispositifs industriels entre des sources industrielles de manière à ce que les deuxièmes matrices de relations correspondant aux sources de données différentes soient les plus proches, où la première relation correspondante déterminée est utilisée pour appliquer des connaissances issues d'une des au moins deux sources de données industrielles à une autre des au moins deux sources de données industrielles ; et
la deuxième relation est différente de la première relation, et/ou un procédé de comparaison adopté pour comparer, par le module de comparaison (604), les deuxièmes matrices de relations correspondant aux au moins deux sources de données industrielles est différent d'un procédé de comparaison adopté pour comparer les premières matrices de relations correspondant aux au moins deux sources de données industrielles.

5. Appareil de mise en correspondance d'un dispositif industriel (60), comprenant :
au moins une mémoire (606), configurée pour stocker un code lisible par ordinateur ; et
au moins un processeur (607), configuré pour appeler le code lisible par ordinateur afin d'exécuter le procédé selon l'une des revendications 1 et 2.

6. Support lisible par ordinateur, sur lequel est stockée une instruction lisible par ordinateur, où, lorsque l'instruction lisible par ordinateur est exécutée par un processeur, le processeur peut exécuter le procédé selon la revendication 1 ou la revendication 2.

7. Programme informatique, comprenant une instruction lisible par ordinateur, où, lorsque l'instruction lisible par ordinateur est exécutée par un processeur, le processeur peut exécuter le procédé selon la revendication 1 ou la revendication 2.

8. Produit programme informatique, stocké de manière tangible sur un support lisible par ordinateur et comprenant une instruction lisible par ordinateur, où, lorsque l'instruction lisible par ordinateur est exécutée par un processeur, le processeur peut exécuter le procédé selon la revendication 1 ou la revendication 2.
